**Europäisches Patentamt**

**European Patent Office**

**Office européen des brevets**

(19)

(11) Veröffentlichungsnummer: **0 333 257 B1**

# (12) EUROPÄISCHE PATENTSCHRIFT

(45) Veröffentlichungstag der Patentschrift:
08.01.92 Patentblatt 92/02

(21) Anmeldenummer: **89200585.1**

(22) Anmeldetag: **09.03.89**

(51) Int. Cl.⁵: **C02F 1/28**, B01D 15/02,
C02F 1/52

(54) **Verfahren zum selektiven Entfernen von Verunreinigungen aus Wasser.**

(30) Priorität: **16.03.88 DE 3808725**

(43) Veröffentlichungstag der Anmeldung:
**20.09.89 Patentblatt 89/38**

(45) Bekanntmachung des Hinweises auf die
Patenterteilung:
**08.01.92 Patentblatt 92/02**

(84) Benannte Vertragsstaaten:
**DE FR IT NL SE**

(56) Entgegenhaltungen:
**EP-A- 0 018 852**
**EP-A- 0 085 779**
**DE-A- 2 756 496**
**FR-A- 2 329 321**

(73) Patentinhaber: **METALLGESELLSCHAFT AG**
**Reuterweg 14 Postfach 3724**
**W-6000 Frankfurt/M.1 (DE)**

(72) Erfinder: **Winkler, Helmut, Dr.**
**Morgensternstrasse 11**
**W-6073 Egelsbach (DE)**
Erfinder: **Baldauf, Günther, Dr.**
**Kastellstrasse 5a**
**W-7500 Karlsruhe (DE)**

## Beschreibung

Die Erfindung betrifft ein Verfahren zum selektiven Entfernen eines oder mehrerer verunreinigender Stoffe aus Wasser, wobei man das Wasser im Aufwärtsstrom durch eine Schüttung aus einem körnigen Adsorptionsmaterial leitet. Bei dem Adsorptionsmaterial kann es sich z.B. um kohlenstoffhaltige Adsorbentien wie Aktivkohle und Aktivkoks oder auch um Harze oder Ionenaustauschmaterialien handeln. Das zu behandelnde Wasser kann Trinkwasser, Grundwasser oder auch Abwasser sein.

Die Verwendung von Aktivkohlefiltern zum Entfernen störender Wasserinhaltsstoffe ist bekannt. Bei der Bereitstellung von Trinkwasser unter Einsatz der Aktivkohlefiltration werden vor allem die im Wasser vorhandenen natürlichen organischen Substanzen weitestgehend mitentfernt. Hierbei gelingt es aber nur bedingt, auch unerwünschte Schadstoffe trotz guter Adsorbierbarkeit selektiv aus dem Wasser zu entfernen und nicht störende Huminstoffe nur zu einem geringen Teil zu adsorbieren.

Bei der Wasseraufbereitung erfolgt die adsorptive Entfernung von Spurenstoffen heute in der Regel in Festbettadsorbern, die nur bis zum Beginn des Durchbruchs eines störenden Wasserinhaltsstoffs betrieben werden können. Danach wird das Filtermaterial ausgetauscht, wobei das Filter außer Betrieb gesetzt werden muß. Das Adsorptionsmaterial, z.B. Aktivkohle, wird hierbei nur unvollständig ausgenützt.

Der Erfindung liegt die Aufgabe zugrunde, störende Stoffe im Wasser in einer Filteranlage im kontinuierlichen Betrieb so zu adsorbieren, daß eine gute Ausnutzung des Adsorptionsmaterials erreicht wird. Erfindungsgemäß gelingt dies bei einem zu behandelnden Wasser, das einen ersten, zu entfernenden Stoff (oder Stoffgemisch) und einen zweiten, nicht zu entfernenden Stoff (oder Stoffgemisch) enthält und der erste Stoff am Adsorptionsmaterial besser adsorbierbar ist als der zweite Stoff, dadurch, daß man periodisch 5 bis 70% des Adsorptionsmittels vom unteren Ende der Schüttung entfernt und die gleiche Menge an frischem oder regeneriertem Adsorptionsmaterial auf die Schüttung von oben zugibt und daß man 30 bis 70% des zu behandelnden Wassers in den unteren Bereich der Schüttung einleitet und den Restteil des zu behandelnden Wassers direkt dem unteren Bereich des frisch zugegebenen Adsorptionsmaterials zuführt. Zumeist liegt der zweite Stoff oder das zweite Stoffgemisch, dessen Adsorption nicht nötig ist, in höherer Konzentration als der erste Stoff vor.

Eine bevorzugte Verfahrensweise besteht darin, daß man die Konzentration des ersten Stoffs im aus dem oberen Bereich der Schüttung abgezogenen, behandelten Wasser mißt und bei Überschreiten einer Konzentrationsgrenze 5 bis 70% des gebrauchten Adsorptionsmaterials vom unteren Ende der Schüttung entfernt und eine entsprechende Menge an frischem oder regeneriertem Adsorptionsmaterial von oben der Schüttung zugibt.

Bei dem ersten Stoff, der z.B. bei der Trinkwasseraufbereitung aus dem Wasser adsorptiv entfernt wird, kann es sich beispielsweise um 1.1.1.-Trichlorethan, Trichlorethen oder Tetrachlorethen handeln, doch kommen auch andere Spurenstoffe in Frage. Als zweiter Stoff ist vor allem an organische Wasserinhaltsstoffe gedacht, z.B. Huminstoffe, die im Rohwasser enthalten sind und im Trinkwasser nicht stören.

Wird das Verfahren auf anderen Gebieten, z.B. bei der Abwasserreinigung, verwendet, so kann es sich bei dem ersten Stoff, der nur in geringer Konzentration im Wasser enthalten ist, etwa um resistente, biologisch nicht abbaubare Schadstoffe handeln, beim zweiten Stoff, dessen Adsorption nicht nötig und auch nicht erwünscht ist, kann es sich z.B. um biologisch leicht abbaubare Stoffe handeln.

Durch das erfindungsgemäße Verfahren gelingt es, den ersten Stoff oder das erste Stoffgemisch selektiv und mit hoher Ausnutzung der Kapazität des Adsorptionsmaterials aus dem Wasser zu entfernen.

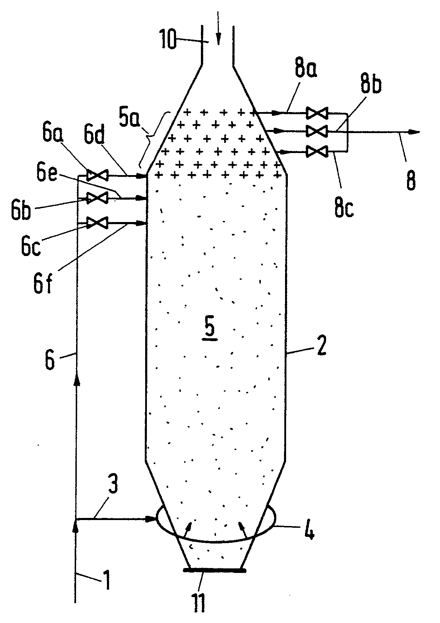

Einzelheiten des Verfahrens werden mit Hilfe der Zeichnung erläutert.

Aus der Leitung (1) kommt das zu behandelnde Rohwasser, das im Aufwärtsstrom durch den das Adsorptionsmaterial als Schüttung (5) enthaltenden Behälter (2) geführt wird. Im Behälter befindet sich die Schüttung (5) aus körnigem Adsorptionsmaterial, z.B. aus Aktivkohle mit Korngrößen im Bereich von 0,5 bis 6 mm. 30 bis 70% des Rohwassers der Leitung (1) fließen durch die Zweigleitung (3) zu einem Verteilerring (4) und treten in den unteren Bereich des Behälters (2) ein. 70 bis 30% der Gesamtmenge werden durch die Leitung (6) nach oben geführt und gelangen über eines der Absperrventile (6a), (6b) oder (6c) durch die zugehörige Einspeiseleitung (6d), (6e) oder (6f) in den oberen Bereich des Behälters (2). Behandeltes Wasser zieht man über die Leitung (8) ab, wobei ebenfalls in verschiedener Höhe Abzugsleitungen (8a), (8b) und (8c) vom Behälter ausgehen.

Frisches oder regeneriertes Adsorptionsmaterial führt man dem Behälter (2) durch einen oberen Einlaß (10) zu, dabei verfährt man folgendermaßen : Man mißt in nicht dargestellter Weise die Konzentration des im Reinwasser unerwünschten ersten Stoffes in der Leitung (8). Sobald die Konzentration eine Grenze überschritten hat, entfernt man einen Teil des beladenen Adsorptionsmittels durch das untere Ende (11) des Behälters (2) und gibt gleichzeitig frisches Adsorptionsmaterial von oben durch den Einlaß (10) auf. Bei dem periodisch entfernten Teil des Adsorptionsmaterial handelt es sich um 5 bis 70% und vorzugsweise 5 bis 30% des Gesamtvolumens der Schüttung (5). Das in gleicher Menge oben auf die Schüttung aufgegebene frische Material bildet eine hoch aufnahmefähige Schicht (5a), die zur Schüttung (5) gehört, in der Zeichnung der besseren Deutlichkeit wegen aber durch Kreuze hervorgehoben ist.

Die Schicht (5a) aus frischem Adsorptionsmaterial ist ganz besonders in der Lage, den ersten Stoff wirksam zu adsorbieren. Andere Stoffe, deren Adsorption nicht wichtig oder nicht nötig ist, gehen durch diese Schicht weitgehend hindurch. Der Teil des Rohwassers, der durch die Leitung (6) herangeführt wird, wird bevorzugt direkt im Bereich des unteren Endes der Schicht (5a) in den Behälter (2) geleitet. Damit man die Höhe der Schicht (5a) variieren kann, sind am Behälter (2) in verschiedener Höhe Einspeiseleitungen (6d), (6e) und (6f) vorgesehen, die wahlweise benutzt werden können.

Wenn die in der Zeichnung dargestellte Anlage der Aufbereitung von Trinkwasser dient, wählt man für die Aufwärtsströmung des Wassers im mittleren, zylindrischen Teil des Behälters (2) Geschwindigkeiten im Bereich von 5 bis 40 m/h und vorzugsweise 10 bis 30 m/h. Im oberen Bereich, wo sich die frisch aufgegebene Schicht (5a) befindet, ist der Behälter konisch verengt, so daß dort die Strömungsgeschwindigkeiten steigen. Dies ist vorteilhaft, damit die im Wasser enthaltenen schlecht adsorbierbaren Komponenten, z.B. Huminstoffe, in diesem Bereich möglichst nicht adsorbiert werden. Da die Strömungsgeschwindigkeit vom Durchmesser des Behälters abhängt, sind in verschiedener Höhe Abzugsleitungen (8a), (8b) und (8c) vorgesehen, so daß hier Wahlmöglichkeiten bestehen. Die höchste Strömungsgeschwindigkeit, die bei der Aufbereitung von Trinkwasser zweckmäßig ist, liegt im Bereich von 20 bis 60 und vorzugsweise 25 bis 50 m/h.

Beispiel

In einer der Zeichnung im Prinzip entsprechenden Versuchsapparatur wird Wasser, das pro m³ 300 mg Trichlorethen und 2,5 g Huminstoffe enthält, behandelt. Der Behälter (2) mit einem Durchmesser von 0,14 m enthält eine Schüttung aus körniger Aktivkohle, deren maximale Gesamthöhe 3,9 m beträgt. Jeweils die Hälfte des Wassers wird durch die Leitung (3) und die Leitung (6) zugeführt. Sobald die Konzentrationsgrenze von 15 mg/m³ Trichlorethen in der Reingasleitung (8) überschritten ist, entfernt man 10% der gesamten Aktivkohleschüttung durch das untere Ende (11) des Behälters (2) und führt die gleiche Menge an frischer Aktivkohle durch den Einlaß (10) zu. Nachdem dieses portionsweise Auswechseln der Aktivkohle fünfzehnmal wiederholt worden war, findet man in der abgezogenen, beladenen Aktivkohle einen Gehalt an Trichlorethen von 12,5 g pro kg Aktivkohle.

Wenn man das Rohwasser allein durch die Leitungen (1) und (3) in den mit Aktivkohle in einer Höhe von 1,5 m gefüllten Behälter gibt, erreicht man bei der Durchbruchskonzentration des Trichlorethens in der Leitung (8) nur einen Gehalt an Trichlorethen von 6 g pro kg Aktivkohle. Dies zeigt, daß die erfindungsgemäße Arbeitsweise die Kapazität des Adsorptionsmittels viel besser ausnutzt.

## Patentansprüche

1. Verfahren zum selektiven Entfernen von verunreinigenden Stoffen aus Wasser, wobei man das Wasser im Aufwärtsstrom durch eine Schüttung aus einem körnigen Adsorptionsmaterial leitet, dadurch gekennzeichnet, daß das zu behandelnde Wasser einen ersten, zu entfernenden Stoff (oder Stoffgemisch) und einen zweiten, nicht zu entfernenden Stoff (oder Stoffgemisch) enthält, wobei der erste Stoff am Adsorptionsmaterial besser adsorbierbar ist als der zweite Stoff, daß man periodisch 5 bis 70% des Adsorptionsmaterials vom unteren Ende der Schüttung entfernt und die gleiche Menge an frischem oder regeneriertem Adsorptionsmaterial auf die Schüttung von oben zugibt und daß man 30 bis 70% des zu behandelnden Wassers in den unteren Bereich der Schüttung einleitet und den Restteil des zu behandelnden Wassers direkt dem unteren Bereich des frisch zugegebenen Adsorptionsmaterials zuführt.

2. Verfahren nach Anspruch 1, dadurch gekennzeichnet, daß man die Konzentration des ersten Stoffs im aus dem oberen Bereich der Schüttung abgezogenen, behandelten Wasser mißt und bei Überschreiten einer Konzentrationsgrenze 5 bis 70% des gebrauchten Adsorptionsmaterials vom unteren Ende der Schüttung entfernt und eine entsprechende Menge an frischem oder regeneriertem Adsorptionsmaterial von oben der Schüttung zugibt.

## Claims

1. A process for selectively removing contaminating substances from water, which is caused to rise through a bed of a granular adsorbent, characterized in that the water to be treated contains a first substance (or mixture of substances), which is to be removed, and a second substance (or mixture of substances), which is not to be removed, the first substance is more effectively adsorbable on the adsorbent than the second substance, 5 to 70% of the adsorbent are periodically removed from the bottom end of the bed and the same amount of fresh or regenerated adsorbent is supplied to the bed from above, 30 to 70% of the water to be treated is introduced into the lower portion of the bed and the remainder of the water to be treated is directly supplied to the lower portion of the freshly supplied adsorbent.

2. A process according to claim 1, characterized in that the concentration of the first substance in the treated water which has been withdrawn from the upper portion of the bed is measured and, when the concentration has risen above a limit, 5 to 70% of the used adsorbent are removed from the bottom end of the bed and a corresponding amount of fresh or regenerated adsorbent is supplied to the bed from above.

## Revendications

1. procédé pour éliminer sélectivement des substances polluantes de l'eau, qui consiste à envoyer l'eau en courant ascendant dans un tas d'un matériau d'adsorption en grains, caractérisé en ce que l'eau à traiter contenant une première substance (ou mélange de substances) à éliminer et une seconde substance (ou mélange de substances) qui ne doit pas être éliminée, la première substance pouvant être mieux adsorbée sur le matériau d'adsorption que la seconde substance, le procédé consiste à enlever périodiquement de 5 à 70% du matériau d'adsorption de l'extrémité inférieure du tas et à charger sur le tas, par le haut, la même quantité de matériau d'adsorption frais ou régénéré, et à envoyer de 30 à 70% de l'eau à traiter dans la partie inférieure du tas et à envoyer la partie restante de l'eau à traiter directement à la partie inférieure du matériau d'adsorption fraîchement chargé.

2. Procédé suivant la revendication 1, caractérisé en ce qu'il consiste à mesurer la concentration de la première substance dans l'eau traitée et soutirée de la partie supérieure du tas et, en cas de dépassement d'un seuil de concentration, à enlever de 5 à 70% du matériau d'adsorption usé de l'extrémité inférieure du tas et à charger par le haut du tas une quantité correspondante de matériau d'adsorption frais ou régénéré.